# EUROPÄISCHE PATENTSCHRIFT

(11) **EP 2 670 976 B1**
(45) Veröffentlichungstag und Bekanntmachung des Hinweises auf die Patenterteilung: **19.04.2017**
(21) Anmeldenummer: 11805438.6
(22) Anmeldetag: 08.12.2011
(51) Int. Cl.: F03B 17/06, F03D 5/00

(54) **VERFAHREN UND VORRICHTUNG ZUR WANDLUNG VON ENERGIE DURCH ELEKTROAKTIVE POLYMER**
METHOD AND DEVICE FOR CONVERTING ENERGY BY ELECTRO-ACTIVE POLYMERS
PROCÉDÉ ET DISPOSITIF POUR LA TRANSFORMATION D'ÉNERGIE PAR UN POLYMÈRE ÉLECTROACTIF

(30) Priorität: 02.02.2011 DE 102011003483
(43) Veröffentlichungstag der Anmeldung: 11.12.2013
(73) Patentinhaber: Robert Bosch GmbH, 70442 Stuttgart (DE)
(72) Erfinder: GUYENOT, Michael, 71638 Ludwigsburg (DE); MICHALKE, Gabriele, 70195 Stuttgart (DE); HAGEMANN, Benjamin, 70839 Gerlingen (DE); GRAUER, Matthias, 97072 Wuerzburg (DE); DENES, Istvan, 71336 Waiblinge/Hohenacker (DE)
(86) Internationale Anmeldenummer: PCT/EP2011/072146
(87) Internationale Veröffentlichungsnummer: WO 2012/103976

(56) Entgegenhaltungen:
- EP-A1- 1 816 345
- WO-A1-2011/011026
- GB-A- 2 469 740
- JP-A- 2011 001 883
- DETLEF STOLTEN ET AL: "Novel Electric Generator Using Electroactive Polymer Articial Muscle (EPAM)", 18TH WORLD HYDROGEN ENERGY CONFERENCE 2010 - WHEC 2010 PARALLEL SESSIONS BOOK 3: HYDROGEN PRODUCTION TECHNOLOGIES - PART 2,, 1. Januar 2010 (2010-01-01), Seiten 22-30, XP007920233, ISBN: 978-3-89336-653-8

## Beschreibung

### Stand der Technik

Die vorliegende Erfindung betrifft ein Verfahren und eine Vorrichtung zur Wandlung von Strömungsenergie in elektrische Energie mit hoher Effizienz.

Anlagen zur Wandlung von Strömungsenergie in elektrische Energie sind aus dem Stand der Technik bekannt. Die EP 1816 345 A1 beschreibt eine Unterwasseranlage zur Erzeugung von elektrischer Energie. Hierbei wird eine auf einem strömungsgetriebenen Vehikel angebrachte Turbine durch die Bewegung des Vehikels angetrieben. Nachteilig hieran ist der komplizierte Aufbau dieser Unterwasseranlage, die eingeschränkte örtliche Einsetzbarkeit und die starke Abhängigkeit der Effizienz dieser Anlage von den Strömungseigenschaften des Wassers. Ein weiteres Beispiel für eine Anlage zur Wandlung von Strömungsenergie in elektrische Energie stellt eine Windkraftanlage dar. Nachteilig hieran sind die enormen Kosten für eine solche Anlage und die hohe Standortabhängigkeit. So können Windkraftanlagen effektiv nur in solchen Gebieten eingesetzt werden, in denen ein geeignetes Windklima vorherrscht.

JP 2011-001883 A beschreibt ein Verfahren zur Erzeugung von Windenergie mittels eines Strömungskörpers unter Verwendung eines elektroaktiven Polymers Detlef Stolten et al., "Novel Electric Generator Using Electroactive Polymer Artificial Muscle (EPAM)", WHEC 2010, Buch Nr. 3: "Hydrogen Production Technologies" Teil 2, 1. Januar 2010, Seiten 22-30 und WO 2011/011026 A1 beschreiben die Umwandlung von Strömungsenergie in elektrische Energie unter Verwendung eines elektroaktiven Polymers, wobei sich ein Strömungskörper (eine Wassermühle oder dergleichen) in Wasser bewegt.

EP 1 816 345 A1) beschreibt ein Gezeitenenergieerzeugungssystem, bei dem ein Strömungskörper in einem strömenden Fluid bewegt wird, wodurch eine Turbine angetrieben wird.

GB 2469740 beschreibt ein Windenergieerzeugungssystem das zwei Flugdrachen umfasst. Die Flugdrachen sind so steuerbar, dass Kollisionen oder Konflikte vermieden werden.

### Offenbarung der Erfindung

Das erfindungsgemäße Verfahren mit den Merkmalen des Anspruches 1 zeichnet sich durch eine vereinfachte Durchführbarkeit, hervorragende Steuerbarkeit und hohe Effizienz des Energiewandlungsprozesses aus. Gemäß dem erfindungsgemäßen Verfahren wird ein Strömungskörper in einem strömenden Fluid bereitgestellt. Ein solcher Strömungskörper ist im Einzelnen nicht beschränkt und kann jede Art von Körper umfassen, die geeignet ist, in einem strömenden Fluid bewegt zu werden, wie beispielsweise ein Fluggerät, also z.B. ein Lenkdrachen, Flugdrachen oder Flugzeug. Als strömendes Fluid kommt jegliche Art an strömendem Fluid in Betracht, wie z.B. Wind, Wasserströmung beispielsweise in einem Flusslauf oder im Meer oder Tidenströmung im Meer. Die Strömung kann dabei im Wesentlichen in eine Richtung gerichtet sein oder periodisch wechselnd sein. Durch das strömende Fluid wird der erfindungsgemäße Strömungskörper zur Bewegung angeregt. Der Strömungskörper ist über mindestens ein Verbindungselement mit mindestens einem EAP-Generator verbunden. Ein solches Verbindungselement kann beispielsweise eine Leine und/oder ein Seil sein, über das dann die durch die Bewegung des Strömungskörpers erzeugte Kraft auf den am anderen Ende, ebenfalls mit dem Verbindungselement verbundenen, EAP-Generator übertragen wird. Ein EAP-Generator im Sinne der Erfindung ist eine Vorrichtung, die ein elektroaktives Polymer (EAP) umfasst, und die durch Verformung des elektroaktiven Polymers elektrische Energie aus kinetischer Energie erzeugen kann. EAP-Generatoren und ihre Funktions- bzw. Betriebsweise sind aus dem Stand der Technik bekannt. Durch die von dem Strömungskörper über das Verbindungselement auf den EAP-Generator übertragene Kraft, wird das elektroaktive Polymer des EAP-Generators verformt. Dies leitet den EAP-Generatorzyklus ein, der die Verformungsenergie in elektrische Energie umwandelt. Durch diese einfache Verknüpfung von Bauteilen kann ein Verfahren zur Wandlung von Energie bereitgestellt werden, das sehr effizient und präzise arbeitet und sich gezielt steuern lässt. Die Strömungsenergie lässt sich damit optimal zur Erzeugung elektrischer Energie nutzen, wobei das System ferner autonom arbeiten kann.

Die Unteransprüche zeigen bevorzugte Weiterbildungen der Erfindung.

Vorzugsweise wird der Strömungskörper durch mindestens ein am Strömungskörper befindliches Steuerelement gesteuert. Dies ist vorteilhaft, weil dadurch die Strömungsbahn des Strömungskörpers direkt beeinflusst werden kann und eine Kraftübertragung, z.B. zur Richtungsänderung des Strömungskörpers, nahezu verlustfrei erfolgen kann. Auch kann somit sehr schnell auf sich ändernde Strömungseigenschaften des Fluids reagiert werden.

Weiter vorzugsweise ist das am Strömungskörper befindliche Steuerelement ein Flügelelement und/oder ein Ruder. Flügelelemente bzw. Ruder sind einfach aufgebaute, gut haltbare und weitestgehend unempfindliche Konstruktionen zur Steuerung von Flug- bzw. Strömungskörpern und sind insbesondere aus der Schifffahrt bzw. dem Flugzeugbau bekannt. Durch z.B. simples Umklappen oder Ausklappen derartiger Elemente wird das strömende Fluid abgelenkt bzw. trifft auf andere Prallflächen auf. Alternativ ist auch die Nutzung von Auftriebseffekten möglich. Mit anderen Worten ändert sich durch Verstellen solcher Steuerelemente die Anströmung an den Strömungskörper, so dass das strömende Fluid den Strömungskörper nun so umströmt, dass dieser seine Richtung ändert. Diese Steuerelemente können vorteilhaft durch kleine, an den Steuerelementen befindliche Antriebe gesteuert werden, welche vorzugsweise funkgesteuert sind" wodurch sich eine weitere zusätzliche Verbindungsleitung zwischen dem Strömungskörper und einer Kontrollstation erübrigt.

Gemäß einer weiteren vorteilhaften Ausführungsform kann die Bewegung des Strömungskörpers auch durch mindestens einen, das Verbindungselement betätigenden Aktor gesteuert werden. Ein solcher Aktor kann im einfachsten Fall eine Vorrichtung sein, die das Verbindungselement mechanisch verkürzt oder verlängert, wodurch beispielsweise auf einen bestimmten Punkt des Strömungskörpers eine Kraft, wie z.B. eine Zugkraft, ausgeübt wird, die eine Richtungsänderung des Strömungskörpers bewirkt. Generell ist als Aktor jegliche Konstruktion denkbar, die eine Beeinflussung der Bewegung des Strömungskörpers über mindestens ein Verbindungselement erlaubt, wobei das Verbindungselement auch dasjenige sein kann, das den Strömungskörper mit dem EAP-Generator verbindet. Dies hat den Vorteil, dass eine separate Verbindungsleitung zum Strömungskörper entfallen kann, was den technischen Aufwand, sowie die Kosten und die Durchführung des Verfahrens deutlich verringert.

Vorteilhafterweise ist der in dem erfindungsgemäßen Verfahren verwendete Aktor ein EAP-Aktor. EAP-Aktoren sind aus dem Stand der Technik bekannt. Sie umfassen ebenso wie der EAP-Generator, mindestens ein elektroaktives Polymer, das durch Einwirkung von elektrischer Spannung seine Form verändert, also beispielsweise kontrahiert. Diese Kontraktion wird dann über das Verbindungselement auf den Strömungskörper übertragen, auf den somit an dem Anknüpfungspunkt des Verbindungselements ein Zug ausgeübt wird, der die Bewegung und damit auch die Richtung des Strömungskörpers beeinflussen kann. Durch die Verwendung eines EAP-Aktors ist eine einfache, gezielte Steuerung des Strömungskörpers möglich.

Besonders bevorzugt ist es, wenn zur Ausführung des erfindungsgemäßen Verfahrens eine EAP-Einheit vorgesehen ist. Eine EAP-Einheit im Sinne der Erfindung umfasst einen EAP-Generator, der gleichzeitig als EAP-Aktor fungieren kann. Das bedeutet, dass nur eine EAP-Einheit gleichzeitig zur Steuerung des Strömungskörpers und zur Energiewandlung nötig ist. Dies ist dadurch möglich, dass sich EAP-Aktoren und EAP-Generatoren in ihrer Funktionsweise umkehren lassen. Der Einsatz einer EAP-Einheit mit einem gleichzeitig als EAP-Aktor und als EAP-Generator wirkenden EAP-System vereinfacht den funktionellen wie technischen Aufwand zum Betrieb des erfindungsgemäßen Verfahrens beträchtlich, wobei aber die präzise Steuerung und effiziente Energiewandlung nicht nachteilig beeinträchtigt wird.

Die Strömungsbahn des Strömungskörpers kann eine geschlossene Strömungsbahn, oder eine im Wesentlichen lineare Hin-und Herbewegungsbahn sein. Vorzugsweise ist die Strömungsbahn eine geschlossene Strömungsbahn, wie z.B. eine Kreisbahn, eine ovale Bahn oder eine Acht-förmige Bahn. Bei einer geschlossenen Bahn ist die Richtungsänderung des Strömungskörpers am jeweiligen Umkehrpunkt mit einem wesentlich geringeren Krafteintrag verbunden als bei einer linearen Bewegungsbahn, auf der der Strömungskörper zur Richtungsänderung jeweils um 180° direkt gegen die Strömung des strömenden Fluids gedreht werden muss. Vorzugsweise führt der Strömungskörper eine periodische Bewegung aus, d.h. seine Strömungsbahn weist mindestens zwei Umkehrpunkte auf. Eine besonders bevorzugte Strömungsbahn ist dabei die Form ähnlich einer Acht. Diese Acht muss nicht immer zwingend auf derselben Bahn zurückgelegt werden, sondern kann auch einmal kleiner oder größer ausfallen. Durch diese periodische Bewegung wird auch die auf den EAP-Generator einwirkende Kraft periodisch übertragen. Das erleichtert das Durchführen des EAP-Generatorzyklus. Die Strömungsbahn des Strömungskörpers wird vorzugsweise so ausgewählt, dass die Kraft, die nötig ist, um den Umkehrpunkt der Strömungsbahn zu überwinden, minimal ist, so dass lediglich ein kleiner Anstoß des Strömungskörpers ausreicht, um diesen in seiner Bewegungsrichtung abzulenken bzw. umzukehren. Nach Überwindung des Umkehrpunktes trifft dann das strömende Fluid in einem anderen Winkel auf den Strömungskörper auf, so dass dieser in die entgegengesetzte Richtung beschleunigt wird, wodurch eine periodische Bewegung erzeugt wird.

Durch geeignete Wahl der Strömungsbahn kann somit die Ausbeute an elektrischer Energie maximiert und die Effizienz der Umwandlung von Strömungsenergie in elektrische Energie erhöht werden. Durch diese Erfindung kann folglich ein höchst effizientes Verfahren zur Wandlung von Energie bereitgestellt werden, das einfach umzusetzen und kostengünstig ist und an nahezu jedem beliebigen Ort betrieben werden kann.

Weiter erfindungsgemäß wird eine Vorrichtung zur Wandlung von Energie beschrieben, die einen in ein strömendes Fluid einbringbaren Strömungskörper, mindestens einen EAP-Generator und mindestens ein Verbindungselement, welches den EAP-Generator mit dem Strömungskörper verbindet, umfasst. Diese Vorrichtung ist aus einfachen und kostengünstigen Bauteilen aufgebaut und ist hoch effizient in der Umwandlung von Strömungsenergie in elektrische Energie. Durch die feine Abgestimmtheit der Bauelemente werden Energieverluste bei der Wandlung in elektrische Energie minimiert. Die Vorrichtung kann ferner autonom arbeiten, was ihre Betriebskosten senkt.

Vorteilhafterweise weist der Strömungskörper in der erfindungsgemäßen Vorrichtung mindestens ein Steuerelement auf, das insbesondere ein Flügelelement und/oder ein Ruder ist. Diese einfachen und kostengünstigen Elemente erlauben eine direkte und sehr präzise Steuerung des Strömungskörpers.

Weiter vorteilhaft weist die Vorrichtung einen Aktor auf, der mit dem Verbindungselement verbunden ist. Dieser Aktor ist vorgesehen um das Strömungselement zu steuern. Vorzugsweise ist der Aktor ein EAP-Aktor und weiter vorzugsweise ist der EAP-Aktor gleich dem umgekehrt betriebenen EAP-Generator. Mit anderen Worten umfasst die erfindungsgemäße Vorrichtung eine EAP-Einheit, die einen EAP-Generator umfasst, der gleichzeitig als EAP-Aktor fungieren kann. Dies erhöht die Effizienz der Vorrichtung und erlaubt einen einfachen technischen und kostengünstigen Aufbau der Vorrichtung.

Durch geeignete Wahl des Strömungskörpers und/oder des elektroaktiven Polymers und/oder des Fluids und/oder der Strömungsbahn des Strömungskörpers kann die Effizienz der Wandlung von Strömungsenergie in elektrische Energie gesteigert werden und damit weitestgehend verlustfrei erfolgen. Beispielsweise kann der Strömungskörper so ausgestattet sein, dass sein Reibungswiderstand in dem Fluid minimal ist. Dies steigert zum Einen die Geschwindigkeit des Strömungskörpers in Richtung des strömenden Fluids. Zum Anderen kann dadurch ein etwaiger Umkehrpunkt in der Strömungsbahn des Strömungskörpers leichter überwunden werden. Somit wird durch geeignete Wahl der Form des Strömungskörpers die auf den Strömungskörper zur Ausführung der entsprechenden Bewegung zu übertragende Kraft unter Beibehaltung der hohen Strömungsgeschwindigkeit, gesenkt. Eine Änderung der Richtung des Strömungskörpers kann somit durch minimale Krafteinwirkung, also durch beispielsweise nur einen kleinen Anstoß in eine andere Richtung, eingeleitet werden, was die Effizienz und Ausbeute an elektrischer Energie steigert.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht einer ersten Ausführungsform der vorliegenden Erfindung
- Figur 2: eine schematische Ansicht einer zweiten Ausführungsform der vorliegenden Erfindung und
- Figur 3: eine schematische Ansicht einer dritten Ausführungsform der vorliegenden Erfindung.

### Ausführungsformen der Erfindung

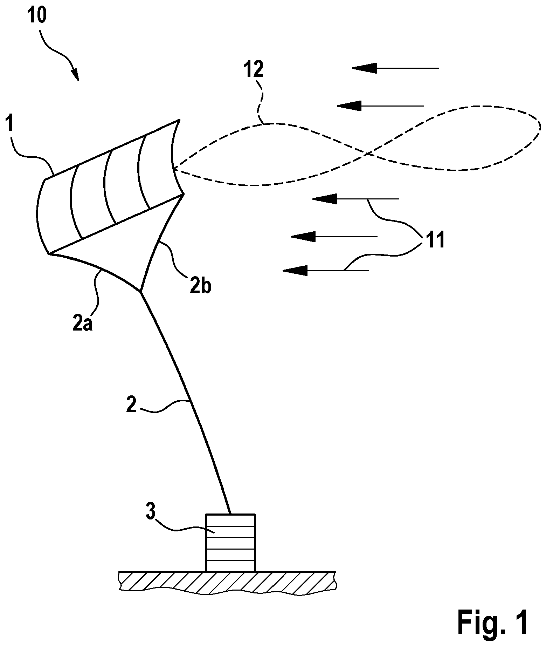

Nachfolgend wird unter Bezugnahme auf Figur 1 eine Vorrichtung 10 zur Wandlung von Strömungsenergie in elektrische Energie gemäß einer ersten Ausführungsform der Erfindung beschrieben. Diese Vorrichtung 10 umfasst einen Flugdrachen 1, der über ein Seil 2 mit einer EAP-Einheit 3, umfassend einen EAP-Generator, der gleichzeitig als EAP-Aktor wirkt, in Verbindung steht. Das Seil 2 ist in einigem Abstand von der EAP-Einheit 3 in zwei Teilseile 2a und 2b aufgeteilt ist, die dann an zwei unterschiedlichen Punkten des Flugdrachens 1 angreifen.

Der EAP-Generator bzw. EAP-Aktor umfasst ein zwischen zwei nachgiebigen Elektroden eingebrachtes elektroaktives Polymer (nicht gezeigt). Die Vorrichtung 10 ist in ein strömendes Fluid 11 (durch Pfeile angedeutet) eingebracht, so dass der Flugdrachen 1 durch das strömende Fluid 11 zu Bewegung angeregt wird.

Durch die Bewegung des Flugdrachens 1 in dem strömenden Fluid 11 wird in dem EAP-Generator 3 ein EAP-Generatorzyklus zur Wandlung von kinetischer in elektrische Energie initiiert. In einem ersten Schritt wird der EAP-Generator 3 auf Grund der äußeren Krafteinwirkung, nämlich des Zuges am Seil 2 durch die Ausführung der Bewegung des Flugdrachens 1, gedehnt. Bei maximaler Dehnung des EAP-Generators 3 wird in einem weiteren Schritt, der EAP-Generator 3 mit elektrischen Ladungen unterhalb der Durchbruchsfeldstärke beaufschlagt. Bei Verringerung der äußeren Kraft entspannt sich das elektroaktive Polymer wieder. Während dieser Phase erhöht sich die im EAP-Generator 3 gespeicherte elektrische Energie. In einem letzten Schritt des Generatorzyklus wird der EAP-Generator 3 entladen, wobei sich das elektroaktive Polymer vollständig entspannt. Somit wird auf einfache Weise Strömungsenergie in elektrische Energie umgewandelt.

Die Flugbahn wird dabei auch durch die EAP-Einheit 3, gesteuert, wobei der EAP-Generator als Aktor arbeitet. Mit anderen Worten wird an das elektroaktive Polymer eine Spannung angelegt, wodurch eine Verformung des elektroaktiven Polymers auftritt, die sich dann direkt über das Seil 2 auf den Flugdrachen 1 auswirkt, der dadurch in seiner Flugbahn 12 beeinflusst wird. Gemäß dieser Ausführungsform der vorliegenden Erfindung wird an den EAP-Aktor 3 eine Spannung so angelegt, dass die Kontraktion des EAP-Aktors 3 das Seil 2 spannt und entspannt, so dass der sich im strömenden Fluid 11 bewegende Flugdrachen 1 eine Flugkurve 12 in Form einer Acht beschreibt. Allerdings ist auch jegliche andere Form der Flugbahn denkbar.

In allen Ausführungsformen sind gleiche bzw. funktionsgleiche Bauteile mit denselben Bezugszeichen versehen.

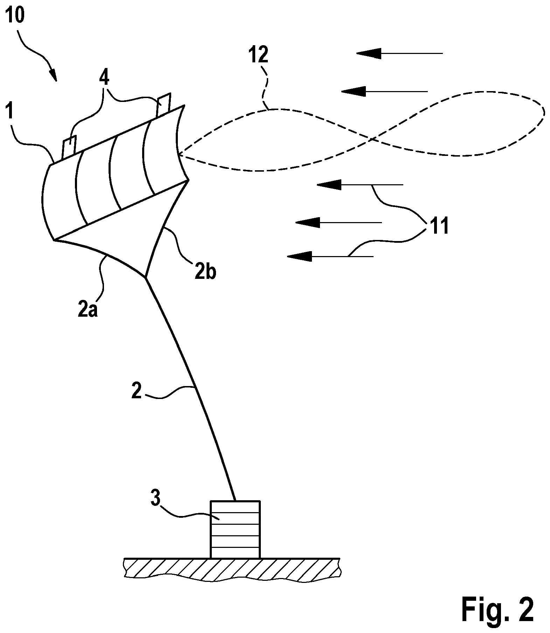

Figur 2 zeigt eine Vorrichtung gemäß einer zweiten Ausführungsform der Erfindung, wobei der Flugdrachen 1 zwei Flügelelemente 4 aufweist, mit denen die Bewegung, d.h. die Flugbahn 12 des Flugdrachens 1, gezielt gesteuert werden kann. Hierzu umfassen die Flügelelemente 4 einen Antrieb (nicht gezeigt), welcher über das Seil 2 oder per Funk angesteuert wird. Durch Aktivierung des Antriebs wird die Stellung der Flügelelemente 4 so variiert, dass der Flugdrachen 1 die vorgesehene Flugbahn 12 ausführt. Gemäß dieser Ausführungsform kann die Flugbahn 12 des Flugdrachens 1 so präzise gesteuert werden, dass kleinste Änderungen des Strömungsverhaltens des strömenden Fluids optimal ausgenutzt werden können. Dabei ist die zur Verstellung der Flügelelemente 4 notwendige Energie geringer als die durch den EAP-Generator 3 wandelbare elektrische Energie.

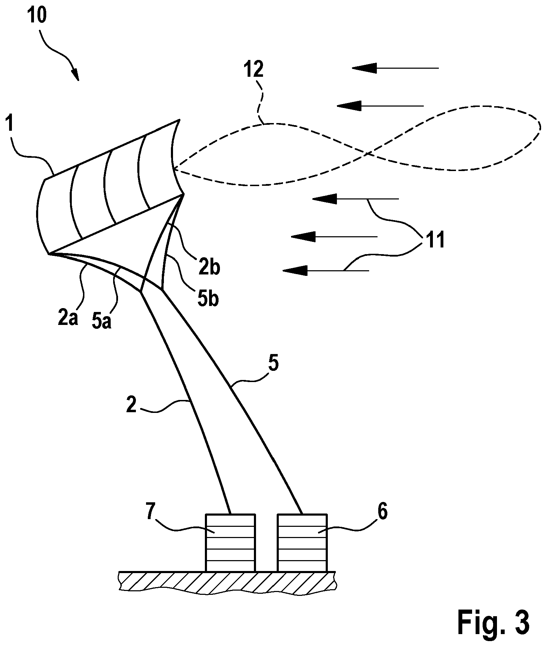

Die Ausführungsform der erfindungsgemäßen Vorrichtung 10 gemäß Figur 3 zeigt einen Flugdrachen 1, der über zwei Seile 2 und 5 mit einem separaten EAP-Generator 7 und EAP-Aktor 6 verbunden ist. Dabei ist das Seil 5 ebenfalls in einigem Abstand von dem EAP-Aktor 6 in zwei Teilseile 5a und 5b aufgeteilt, die dann wiederum an zwei unterschiedlichen Punkten des Flugdrachens 1 angreifen.

Der EAP-Aktor 6 steuert dabei über das Seil 5 die Bewegung des Flugdrachens 1 in dem strömenden Fluid 11, wohingegen der EAP-Generator 7 die Bewegung des Flugdrachens 1 in dem strömenden Fluid 11 in elektrische Energie umwandelt. Durch die Aufteilung in einen separat mit dem Flugdrachen 1 verbundenen EAP-Generator 7 und einem EAP-Aktor 6 kann die Steuerung der Bewegung, d.h. der Flugbahn 12 des Flugdrachens 1 sehr effektiv und präzise sein, wobei die Energieumwandlung ebenfalls mit hoher Effizienz erfolgen kann.

Durch das erfindungsgemäße Verfahren und die erfindungsgemäße Vorrichtung wird ein effizientes und sehr präzise und einfach steuerbares System zur Wandlung von Strömungsenergie in elektrische Energie bereitgestellt, das befähigt ist, autonom zu arbeiten.

## Patentansprüche

1. Verfahren zur Wandlung von Strömungsenergie in elektrische Energie umfassend die Schritte:
- Bereitstellen eines Strömungskörpers (1) in einem strömenden Fluid (11), wobei der Strömungskörper (1) durch mindestens ein Verbindungselement (2) mit mindestens einem EAP-Generator (3, 7) mit einem elektroaktiven Polymer verbunden ist;
- Erzeugen einer Bewegung des Strömungskörpers (1) durch das strömende Fluid (11) und
- Durchführen eines EAP-Generatorzyklus zur Wandlung von kinetischer in elektrische Energie, umfassend ein Verformen des elektroaktiven Polymers durch die Bewegung des Strömungskörpers (1), welche über das Verbindungselement (2) auf den EAP-Generator (3, 7) übertragen wird,
**dadurch gekennzeichnet, dass** eine Strömungsbahn des Strömungskörpers (1) durch mindestens ein am Strömungskörper (1) befindliches Steuerelement (4) und durch mindestens einen, das Verbindungselement (2) betätigenden EAP-Aktor gesteuert wird, wobei der EAP-Aktor (6) der umgekehrt betriebene EAP-Generator (3, 7) ist.

2. Verfahren nach Anspruch 1, **dadurch gekennzeichnet, dass** das Steuern des Strömungskörpers (1) durch ein Flügelelement und/oder ein Ruder ausgeführt wird.

3. Vorrichtung zur Wandlung von Strömungsenergie in elektrische Energie umfassend:
- einen in ein strömendes Fluid (11) einbringbaren Strömungskörper (1),
- mindestens einen EAP-Generator (3, 7) mit einem elektroaktiven Polymer, und
- mindestens ein Verbindungselement (2), welches den EAP-Generator (3, 7) mit dem Strömungskörper (1) verbindet, um eine durch den Strömungskörper (1) erzeugte Kraft auf das elektroaktive Polymer zu übertragen, **gekennzeichnet durch**
einen EAP-Aktor, der mit dem Verbindungselement (2) verbunden ist, sowie einem am Strömungskörper (1) befindlichen Steuerelement (4), um eine Bewegung des Strömungskörpers (1) und damit eine Strömungsbahn des Strömungskörpers (1) zu steuern, wobei der EAP-Aktor (6) der umgekehrt betriebene EAP-Generator (3, 7) ist.

4. Vorrichtung nach Anspruch 3, **dadurch gekennzeichnet, dass** der Strömungskörper (1) ein Steuerelement (4) aufweist, wobei das Steuerelement (4) ein Flügelelement und/oder ein Ruder ist.

5. Verwendung einer Vorrichtung nach Anspruch 3 oder 4.

## Claims

1. Method for converting flow energy into electrical energy, comprising the following steps:
- providing a flow body (1) in a flowing fluid (11), wherein the flow body (1) is connected by at least one connecting element (2) to at least one EAP generator (3, 7) with an electroactive polymer;
- creating a movement of the flow body (1) through the flowing fluid (11) and
- carrying out an EAP generator cycle for converting kinetic energy into electrical energy, comprising deformation of the electroactive polymer by the movement of the flow body (1), which is transmitted to the EAP generator (3, 7) via the connecting element (2),
**characterized in that** a flow path of the flow body (1) is controlled by at least one control element (4) located on the flow body (1) and by at least one EAP actuator actuating the connecting element (2), wherein the EAP actuator (6) is the EAP generator (3, 7) operated in reverse.

2. Method according to Claim 1, **characterized in that** the controlling of the flow body (1) is performed by a fin element and/or a rudder.

3. Device for converting flow energy into electrical energy, comprising:
- a flow body (1) that can be introduced into a flowing fluid (11),
- at least one EAP generator (3, 7) with an electroactive polymer, and
- at least one connecting element (2), which connects the EAP generator (3, 7) to the flow body (1) in order to transmit a force generated by the flow body (1) to the electroactive polymer, **characterized by**
an EAP actuator, which is connected to the connecting element (2), and a control element (4), which is located on the flow body (1), to control a movement of the flow body (1), and consequently a flow path of the flow body (1), wherein the EAP actuator (6) is the EAP generator (3, 7) operated in reverse.

4. Device according to Claim 3, **characterized in that** the flow body (1) has a control element (4), wherein the control element (4) is a fin element and/or a rudder.

5. Use of a device according to Claim 3 or 4.

## Revendications

1. Procédé pour la transformation de l'énergie d'un écoulement en énergie électrique, comprenant les étapes suivantes:
- préparer un corps d'écoulement (1) dans un fluide en écoulement (11), dans lequel le corps d'écoulement (1) est relié par au moins un élément de liaison (2) à au moins un générateur EAP (3, 7) avec un polymère électroactif,
- produire un mouvement du corps d'écoulement (1) au moyen du fluide en écoulement (11), et
- exécuter un cycle de générateur EAP pour la transformation d'énergie cinétique en énergie électrique, comprenant une déformation du polymère électroactif par le mouvement du corps d'écoulement (1), qui est transmis au générateur EAP (3, 7) par l'élément de liaison (2),
**caractérisé en ce que** l'on commande une trajectoire d'écoulement du corps d'écoulement (1) au moyen d'au moins un élément de commande (4) se trouvant sur le corps d'écoulement (1) et au moyen d'au moins un actionneur EAP actionnant l'élément de liaison (2), dans lequel l'actionneur EAP (6) est le générateur EAP (3, 7) fonctionnant en sens inverse.

2. Procédé selon la revendication 1, **caractérisé en ce que** l'on effectue la commande du corps d'écoulement (1) au moyen d'un élément d'empennage et/ou d'un gouvernail.

3. Dispositif pour la transformation de l'énergie d'un écoulement en énergie électrique, comprenant:
- un corps d'écoulement (1) pouvant être placé dans un fluide en écoulement (11),
- au moins un générateur EAP (3, 7) avec un polymère électroactif, et
- au moins un élément de liaison (2), qui relie le générateur EAP (3, 7) au corps d'écoulement (1), afin de transmettre au polymère électroactif une force produite par le corps d'écoulement (1),
**caractérisé par** un actionneur EAP, qui est relié à l'élément de liaison (2), ainsi qu'à un élément de commande (4) se trouvant sur le corps d'écoulement (1), pour commander un mouvement du corps d'écoulement (1) et dès lors une trajectoire d'écoulement du corps d'écoulement (1), dans lequel l'actionneur EAP (6) est le générateur EAP (3, 7) fonctionnant en sens inverse.

4. Dispositif selon la revendication 3, **caractérisé en ce que** le corps d'écoulement (1) présente un élément de commande (4), dans lequel l'élément de commande (4) est un élément d'empennage et/ou un gouvernail.

5. Utilisation d'un dispositif selon la revendication 3 ou 4.
